# EUROPEAN PATENT APPLICATION

(11) **EP 4 651 472 A1**
(43) Date of publication of application: **19.11.2025**
(21) Application number: 24752637.9
(22) Date of filing: 09.01.2024
(51) Int. Cl.: H04L 67/56

(54) **INTER-CLOUD CAPABILITY NEGOTIATION METHOD AND CLOUD MANAGEMENT PLATFORM**

(30) Priority: 09.02.2023 CN 202310092077
(71) Applicant: Huawei Cloud Computing Technologies Co., Ltd., Guiyang, Guizhou 550025 (CN)
(72) Inventor: WANG, Xinhou, Guiyang, Guizhou 550025 (CN); LEI, Xiaosong, Guiyang, Guizhou 550025 (CN)
(74) Representative: Pfenning, Meinig & Partner mbB
(86) International application number: PCT/CN2024/071340
(87) International publication number: WO 2024/164779

(57) **Abstract**

This application discloses an inter-cloud capability negotiation method and a cloud management platform. The method includes: When a tenant inputs or selects configuration information of a required cloud service via an intermediate cloud management platform, and both a first cloud service and a second cloud service meet the configuration information, a first cloud management platform negotiates with a second cloud management platform via the intermediate cloud management platform, and determines, based on a result of the negotiation, whether to provide the first cloud service for the tenant. The first cloud management platform is configured to provide the first cloud service, the second cloud management platform is configured to provide the second cloud service, and the intermediate cloud management platform connects the first cloud management platform and the second cloud management platform. According to the foregoing method, a suitable cloud service can be provided for the tenant without being perceived by the tenant.

## Description

This application claims priority to Chinese Patent Application No. 202310092077.5, filed with the China National Intellectual Property Administration on February 9, 2023, and entitled "INTER-CLOUD CAPABILITY NEGOTIATION METHOD AND CLOUD MANAGEMENT PLATFORM", which is incorporated herein by reference in its entirety.

### TECHNICAL FIELD

This application relates to the field of cloud computing technologies, and in particular, to an inter-cloud capability negotiation method and a cloud management platform.

### BACKGROUND

Some cloud services provided by different cloud service providers are similar. Currently, for these similar cloud services, a tenant performs comparison and evaluation mainly by using some analysis tools (such as an Intel cloud optimizer by Densify) or based on service requirements, and then selects a more suitable cloud service to complete a tenant service.

### SUMMARY

This application provides an inter-cloud capability negotiation method and a cloud management platform, to provide a suitable cloud service for a tenant without being perceived by the tenant.

According to a first aspect, embodiments of this application provide an inter-cloud capability negotiation method. The method includes: When a tenant inputs or selects configuration information of a required cloud service via an intermediate cloud management platform, and both a first cloud service and a second cloud service meet the configuration information, a first cloud management platform negotiates with a second cloud management platform via the intermediate cloud management platform, and determines, based on a result of the negotiation, whether to provide the first cloud service for the tenant. The first cloud management platform is configured to provide the first cloud service, the second cloud management platform is configured to provide the second cloud service, and the intermediate cloud management platform connects the first cloud management platform and the second cloud management platform.

Through implementation of the method, when the tenant needs to use a cloud service, the tenant may directly input or select configuration information of the required cloud service on the intermediate cloud management platform. Then, cloud management platforms configured to provide cloud services (such as the first cloud service and the second cloud service) that can meet the configuration information performs negotiation, and determines who is to provide the cloud service required by the tenant. In other words, by using the foregoing method, a suitable cloud service can be provided for the tenant without being perceived by the tenant.

In a possible implementation of the first aspect, the first cloud management platform and the second cloud management platform are deployed in data centers provided by different cloud service providers. It should be understood that a plurality of cloud service providers can provide more cloud services than one cloud service provider. Therefore, in the foregoing manner, a suitable cloud service may be selected and provided for the tenant from more cloud services.

In a possible implementation of the first aspect, before the first cloud management platform negotiates with the second cloud management platform via the intermediate cloud management platform, the method further includes: The first cloud management platform registers a feature of the first cloud service with the intermediate cloud management platform. In addition, the intermediate cloud management platform further stores a feature that is of the second cloud service and that is registered by the second cloud management platform. In this case, that the first cloud management platform negotiates with the second cloud management platform via the intermediate cloud management platform includes: The first cloud management platform negotiates with the second cloud management platform based on a comparison result between the first cloud service and the second cloud service, where the comparison result is obtained after the intermediate cloud management platform compares the feature of the first cloud service with the feature of the second cloud service based on a strategy template.

Optionally, the strategy template includes one or any combination of the following: a template set by the tenant, a template set by the intermediate cloud management platform, and a template set by the first cloud management platform or the second cloud management platform.

In the foregoing implementation, the intermediate cloud management platform may automatically select a corresponding cloud service for the tenant according to an existing strategy (namely, a strategy module) and a requirement of the tenant. In addition, diversity of the strategy template may enable the intermediate cloud management platform to determine, from a plurality of perspectives, which cloud service is more suitable for the tenant, to provide a better cloud service for the tenant.

In a possible implementation of the first aspect, the intermediate cloud management platform includes a first agent module and a second agent module, the first agent module is connected to the first cloud management platform, the second agent module is connected to the second cloud management platform, and before the first cloud management platform negotiates with the second cloud management platform via the intermediate cloud management platform, the method further includes: The first cloud management platform registers a feature of the first cloud service with the intermediate cloud management platform. In addition, the intermediate cloud management platform further stores a feature that is of the second cloud service and that is registered by the second cloud management platform. In this case, that the first cloud management platform negotiates with the second cloud management platform via the intermediate cloud management platform includes: The first cloud management platform negotiates with the second cloud management platform by using the first agent module and the second agent module based on the feature of the first cloud service and the feature of the second cloud service.

Further, before the first cloud management platform negotiates with the second cloud management platform by using the first agent module and the second agent module based on the feature of the first cloud service and the feature of the second cloud service, the method further includes: The first cloud management platform sends configuration information of the first agent module to the intermediate cloud management platform, so that the intermediate cloud management platform creates the first agent module based on the configuration information of the first agent module.

In the foregoing implementation, the first cloud management platform may negotiate with the second cloud management platform by using the first agent module and the second agent module. In comparison with the previous negotiation manner (that is, the first cloud management platform negotiates with the second cloud management platform based on the comparison result obtained by using the strategy template), negotiation may be performed more flexibly based on an actual situation in this manner. For example, in a negotiation process, the second cloud management platform reduces a use price of the second cloud service. In this case, the first cloud management platform may appropriately reduce a use price of the first cloud service within an allowed range, or improve performance of the first cloud service, to try to provide the first cloud service for the tenant.

In a possible implementation of the first aspect, the first cloud management platform includes a second agent module, the second agent module is connected to the second cloud management platform, and before the first cloud management platform negotiates with the second cloud management platform via the intermediate cloud management platform, the method further includes: The first cloud management platform receives a feature that is of the second cloud service and that is registered by the second cloud management platform. In this case, that the first cloud management platform negotiates with the second cloud management platform via the intermediate cloud management platform includes: in response to a notification message sent by the intermediate cloud management platform, the first cloud management platform negotiates with the second cloud management platform by using the second agent module based on a feature of the first cloud service and the feature of the second cloud service.

Further, before the first cloud management platform negotiates with the second cloud management platform by using the second agent module based on the feature of the first cloud service and the feature of the second cloud service, the method further includes: The first cloud management platform receives configuration information of the second agent module sent by the second cloud management platform, and then creates the second agent module based on the configuration information of the second agent module.

In a possible implementation of the first aspect, the second cloud management platform includes a first agent module, the first agent module is connected to the first cloud management platform, and before the first cloud management platform negotiates with the second cloud management platform via the intermediate cloud management platform, the method further includes: The first cloud management platform registers a feature of the first cloud service with the second cloud management platform. In this case, that the first cloud management platform negotiates with the second cloud management platform via the intermediate cloud management platform includes: The first cloud management platform negotiates with the second cloud management platform by using the first agent module based on the feature of the first cloud service and a feature of the second cloud service.

Further, before the first cloud management platform negotiates with the second cloud management platform by using the first agent module based on the feature of the first cloud service and the feature of the second cloud service, the method further includes: The first cloud management platform sends configuration information of the first agent module to the second cloud management platform, so that the second cloud management platform creates the first agent module based on the configuration information of the first agent module.

In the foregoing implementation, the first cloud management platform may negotiate with the second cloud management platform by using the second agent module deployed on the first cloud management platform or the first agent module deployed on the second cloud management platform. In comparison with the previous negotiation manner (that is, the first cloud management platform negotiates with the second cloud management platform by using the first agent module and the second agent module in the intermediate cloud management platform), a loss caused by negotiation between the first cloud management platform and the second cloud management platform may be reduced in this manner, for example, negotiation between the first cloud management platform and the second cloud management platform may be directly performed on the first cloud management platform or the second cloud management platform. In addition, load of the intermediate cloud management platform can be reduced in this manner.

According to a second aspect, embodiments of this application provide another inter-cloud capability negotiation method. The method includes: An intermediate cloud management platform receives configuration information that is of a required cloud service and that is input or selected by a tenant; when both a first cloud service and a second cloud service meet the configuration information, the intermediate cloud management platform indicates a first cloud management platform to negotiate with a second cloud management platform, where the first cloud service is provided by the first cloud management platform, the second cloud service is provided by the second cloud management platform, and the intermediate cloud management platform connects the first cloud management platform and the second cloud management platform; and then, the intermediate cloud management platform provides a cloud service for the tenant based on a result of the negotiation.

In a possible implementation of the second aspect, the first cloud management platform and the second cloud management platform are deployed in cloud environments provided by different cloud service providers.

In a possible implementation of the second aspect, the intermediate cloud management platform stores a strategy template, and that the intermediate cloud management platform indicates the first cloud management platform to negotiate with the second cloud management platform includes: The intermediate cloud management platform compares a feature of the first cloud service with a feature of the second cloud service based on the strategy template, where the feature of the first cloud service is registered by the first cloud management platform with the intermediate cloud management platform, and the feature of the second cloud service is registered by the second cloud management platform with the intermediate cloud management platform.

Optionally, the strategy template includes one or any combination of the following: a template set by the tenant, a template set by the intermediate cloud management platform, and a template set by the first cloud management platform or the second cloud management platform.

In a possible implementation of the second aspect, the intermediate cloud management platform includes a first agent module and a second agent module, the first agent module is connected to the first cloud management platform, the second agent module is connected to the second cloud management platform, and that the intermediate cloud management platform indicates the first cloud management platform to negotiate with the second cloud management platform includes: The intermediate cloud management platform indicates the first agent module to negotiate with the second agent module based on a feature of the first cloud service and a feature of the second cloud service, where the feature of the first cloud service is registered by the first cloud management platform with the intermediate cloud management platform, and the feature of the second cloud service is registered by the second cloud management platform with the intermediate cloud management platform.

Further, the method further includes: The intermediate cloud management platform receives configuration information of the first agent module sent by the first cloud management platform, and creates the first agent module based on the configuration information of the first agent module; and the intermediate cloud management platform receives configuration information of the second agent module sent by the second cloud management platform, and creates the second agent module based on the configuration information of the second agent module.

In a possible implementation of the second aspect, the first cloud management platform includes a second agent module, the second agent module is connected to the second cloud management platform, and that the intermediate cloud management platform indicates the first cloud management platform to negotiate with the second cloud management platform includes: The intermediate cloud management platform sends a notification message to the first cloud management platform, where the notification message indicates the first cloud management platform to negotiate with the second cloud management platform by using the second agent module based on a feature of the first cloud service and a feature of the second cloud service, and the feature of the second cloud service is registered by the second cloud management platform with the first cloud management platform.

In a possible implementation of the second aspect, the second cloud management platform includes a first agent module, the first agent module is connected to the first cloud management platform, and that the intermediate cloud management platform indicates the first cloud management platform to negotiate with the second cloud management platform includes: The intermediate cloud management platform sends a notification message to the second cloud management platform, where the notification message indicates the second cloud management platform to negotiate with the first cloud management platform by using the first agent module based on a feature of the first cloud service and a feature of the second cloud service, and the feature of the first cloud service is registered by the first cloud management platform with the second cloud management platform.

According to a third aspect, embodiments of this application provide a first cloud management platform. The first cloud management platform includes a negotiation module and a determining module. The negotiation module is configured to: when a tenant inputs or selects configuration information of a required cloud service via an intermediate cloud management platform, and both a first cloud service and a second cloud service meet the configuration information, negotiate with a second cloud management platform via the intermediate cloud management platform, where the first cloud management platform is configured to provide the first cloud service, the second cloud management platform is configured to provide the second cloud service, and the intermediate cloud management platform connects the first cloud management platform and the second cloud management platform. The determining module is configured to determine, based on a result of the negotiation, whether to provide the first cloud service for the tenant.

In a possible implementation of the third aspect, the first cloud management platform and the second cloud management platform are deployed in data centers provided by different cloud service providers.

In a possible implementation of the third aspect, the first cloud management platform further includes a registration module. The registration module is configured to register a feature of the first cloud service with the intermediate cloud management platform. In addition, the intermediate cloud management platform further stores a feature that is of the second cloud service and that is registered by the second cloud management platform. The negotiation module is configured to negotiate with the second cloud management platform based on a comparison result between the first cloud service and the second cloud service, where the comparison result is obtained after the intermediate cloud management platform compares the feature of the first cloud service with the feature of the second cloud service based on a strategy template.

Optionally, the strategy template includes one or any combination of the following: a template set by the tenant, a template set by the intermediate cloud management platform, and a template set by the first cloud management platform or the second cloud management platform.

In a possible implementation of the third aspect, the intermediate cloud management platform includes a first agent module and a second agent module, the first agent module is connected to the first cloud management platform, the second agent module is connected to the second cloud management platform, and the first cloud management platform further includes a registration module. The registration module is configured to register a feature of the first cloud service with the intermediate cloud management platform. In addition, the intermediate cloud management platform further stores a feature that is of the second cloud service and that is registered by the second cloud management platform. The negotiation module is configured to negotiate with the second cloud management platform by using the first agent module and the second agent module based on the feature of the first cloud service and the feature of the second cloud service.

Further, the negotiation module is further configured to send configuration information of the first agent module to the intermediate cloud management platform, so that the intermediate cloud management platform creates the first agent module based on the configuration information of the first agent module.

In a possible implementation of the third aspect, the first cloud management platform further includes a second agent module, and the second agent module is configured to connect to the second cloud management platform. The negotiation module is further configured to: receive a feature that is of the second cloud service and that is registered by the second cloud management platform; and in response to a notification message sent by the intermediate cloud management platform, negotiate with the second cloud management platform by using the second agent module based on a feature of the first cloud service and the feature of the second cloud service.

Further, the negotiation module is further configured to: receive configuration information of the second agent module sent by the second cloud management platform, and create the second agent module based on the configuration information of the second agent module.

In a possible implementation of the third aspect, the second cloud management platform includes a first agent module, the first agent module is connected to the first cloud management platform, the first cloud management platform further includes a registration module, and the registration module is configured to register a feature of the first cloud service with the second cloud management platform. The negotiation module is configured to: in response to a notification message sent by the intermediate cloud management platform, negotiate with the second cloud management platform by using the first agent module based on the feature of the first cloud service and a feature of the second cloud service.

Further, the negotiation module is further configured to send configuration information of the first agent module to the second cloud management platform, so that the second cloud management platform creates the first agent module based on the configuration information of the first agent module.

According to a fourth aspect, embodiments of this application provide an intermediate cloud management platform. The intermediate cloud management platform includes a receiving module, a control module, and a cloud service providing module. The receiving module is configured to receive configuration information that is of a required cloud service and that is input or selected by a tenant. The control module is configured to: when both a first cloud service and a second cloud service meet the configuration information, indicate a first cloud management platform to negotiate with a second cloud management platform, where the first cloud service is provided by the first cloud management platform, the second cloud service is provided by the second cloud management platform, and the intermediate cloud management platform connects the first cloud management platform and the second cloud management platform. The cloud service providing module is configured to provide a cloud service for the tenant based on a result of the negotiation.

In a possible implementation of the fourth aspect, the first cloud management platform and the second cloud management platform are deployed in cloud environments provided by different cloud service providers.

In a possible implementation of the fourth aspect, the intermediate cloud management platform stores a strategy template. The control module is configured to compare a feature of the first cloud service with a feature of the second cloud service based on the strategy template, where the feature of the first cloud service is registered by the first cloud management platform with the intermediate cloud management platform, and the feature of the second cloud service is registered by the second cloud management platform with the intermediate cloud management platform.

Optionally, the strategy template includes one or any combination of the following: a template set by the tenant, a template set by the intermediate cloud management platform, and a template set by the first cloud management platform or the second cloud management platform.

In a possible implementation of the fourth aspect, the intermediate cloud management platform further includes a first agent module and a second agent module. The first agent module is configured to connect to the first cloud management platform. The second agent module is configured to connect to the second cloud management platform. The control module is configured to indicate the first agent module to negotiate with the second agent module based on a feature of the first cloud service and a feature of the second cloud service, where the feature of the first cloud service is registered by the first cloud management platform with the intermediate cloud management platform, and the feature of the second cloud service is registered by the second cloud management platform with the intermediate cloud management platform.

Further, the receiving module is further configured to: receive configuration information of the first agent module sent by the first cloud management platform, and receive configuration information of the second agent module sent by the second cloud management platform. The control module is further configured to: create the first agent module based on the configuration information of the first agent module, and create the second agent module based on the configuration information of the second agent module.

In a possible implementation of the fourth aspect, the first cloud management platform includes a second agent module, and the second agent module is connected to the second cloud management platform. The control module is configured to send a notification message to the first cloud management platform, where the notification message indicates the first cloud management platform to negotiate with the second cloud management platform by using the second agent module based on a feature of the first cloud service and a feature of the second cloud service, and the feature of the second cloud service is registered by the second cloud management platform with the first cloud management platform.

In a possible implementation of the fourth aspect, the second cloud management platform includes a first agent module, and the first agent module is connected to the first cloud management platform. The control module is configured to send a notification message to the second cloud management platform, where the notification message indicates the second cloud management platform to negotiate with the first cloud management platform by using the first agent module based on a feature of the first cloud service and a feature of the second cloud service, and the feature of the first cloud service is registered by the first cloud management platform with the second cloud management platform.

According to a fifth aspect, embodiments of this application provide a computing device. The computing device includes a processor and a memory. The processor executes computer program code in the memory, to implement some or all of the methods described in any one of the first aspect and the implementations of the first aspect, or implement some or all of the methods described in any one of the second aspect and the implementations of the second aspect.

According to a sixth aspect, embodiments of this application provide a computer-readable storage medium. The computer storage medium stores computer program code. When the computer program code is executed by a computing device, the computing device performs some or all of the methods described in any one of the first aspect and the implementations of the first aspect, or performs some or all of the methods described in any one of the second aspect and the implementations of the second aspect.

According to a seventh aspect, embodiments of this application provide a computer program product. The computer program product may be software or a program product that includes instructions and that can be run on a computing device or can be stored in any usable medium. When the computer program product is run on at least one computing device, the at least one computing device is enabled to perform some or all of the methods described in any one of the first aspect and the implementations of the first aspect, or perform some or all of the methods described in any one of the second aspect and the implementations of the second aspect.

### BRIEF DESCRIPTION OF DRAWINGS

FIG. 1 is a diagram of a multi-cloud scenario according to an embodiment of this application;
FIG. 2 is a schematic flowchart of an inter-cloud capability negotiation method according to an embodiment of this application;
FIG. 3 is a diagram of a principle of negotiation between a first cloud management platform and a second management platform via an intermediate cloud management platform according to an embodiment of this application;
FIG. 4 is a diagram of another principle of negotiation between a first cloud management platform and a second management platform via an intermediate cloud management platform according to an embodiment of this application;
FIG. 5 is a diagram of another principle of negotiation between a first cloud management platform and a second management platform via an intermediate cloud management platform according to an embodiment of this application;
FIG. 6 is a diagram of another principle of negotiation between a first cloud management platform and a second management platform via an intermediate cloud management platform according to an embodiment of this application;
FIG. 7 is a schematic flowchart of a method in which a first cloud management platform negotiates with a second management platform via an intermediate cloud management platform according to an embodiment of this application;
FIG. 8 is a schematic flowchart of another method in which a first cloud management platform negotiates with a second management platform via an intermediate cloud management platform according to an embodiment of this application;
FIG. 9 is a schematic flowchart of another method in which a first cloud management platform negotiates with a second management platform via an intermediate cloud management platform according to an embodiment of this application;
FIG. 10 is a schematic flowchart of another method in which a first cloud management platform negotiates with a second management platform via an intermediate cloud management platform according to an embodiment of this application;
FIG. 11 is a diagram of a structure of a first cloud management platform according to an embodiment of this application;
FIG. 12 is a diagram of a structure of an intermediate cloud management platform according to an embodiment of this application;
FIG. 13 is a diagram of a structure of a computing device according to an embodiment of this application; and
FIG. 14 is a diagram of a structure of a computing device cluster according to an embodiment of this application.

### DESCRIPTION OF EMBODIMENTS

To make the solutions in embodiments of this application clearer, related terms are first explained before the solutions in embodiments of this application are specifically described.

In a cloud computing mode, a cloud service provider provides a cloud service for a tenant by using a basic resource owned by the cloud service provider. The basic resource owned by the cloud service provider includes a computing resource, a storage resource, and a network resource. The computing resource may be a computing device, for example, a server and a bare metal server (bare metal server, BMS), the storage resource may be a storage device, for example, a solid-state disk (solid-state disk, SSD) and a mechanical hard disk drive (hard disk drive, HDD), and the network resource may be a network device, for example, a router and a switch.

Some cloud services provided by different cloud service providers are similar. For example, a cloud service provider A and a cloud service provider B each provide an encryption cloud service, where the encryption cloud service provided by the cloud service provider A is referred to as an encryption cloud service A, and the encryption cloud service provided by the cloud service provider B is referred to as an encryption cloud service B. The encryption cloud service A and the encryption cloud service B are similar, and similarity between the encryption cloud service A and the encryption cloud service B is specifically shown as follows: Both the encryption cloud service A and the encryption cloud service B can implement an encryption function. However, the encryption cloud service A is cheaper than the encryption cloud service B, and an encryption speed of the encryption cloud service B is higher than an encryption speed of the encryption cloud service A. In this case, when the tenant needs to use an encryption cloud service to complete a service, should the tenant select the encryption cloud service A or the encryption cloud service B?

In view of this problem, embodiments of this application provide an inter-cloud capability negotiation method. Different cloud service providers can negotiate with each other by using the method, to determine who is to provide a cloud service for the tenant, so that the tenant is provided with the cloud service without perception, that is, the tenant does not perceive which specific cloud service provider provides the cloud service for the tenant. In comparison with a method in which the tenant selects a required cloud service from a plurality of cloud services provided by a plurality of cloud service providers in the conventional technology, in the method provided in embodiments of this application, a suitable cloud service can be automatically selected for the tenant, thereby facilitating the tenant to use the cloud service and improving experience of the tenant in using the cloud service.

The inter-cloud capability negotiation method is applicable to a multi-cloud market scenario. A multi-cloud market is a public cloud market jointly created by a plurality of cloud service providers or created by a third-party organization in a public cloud market. The plurality of cloud service providers provide, for the multi-cloud market, cloud services that can be respectively provided by the plurality of cloud service providers, so that the tenant can purchase and use a cloud service by using the multi-cloud market.

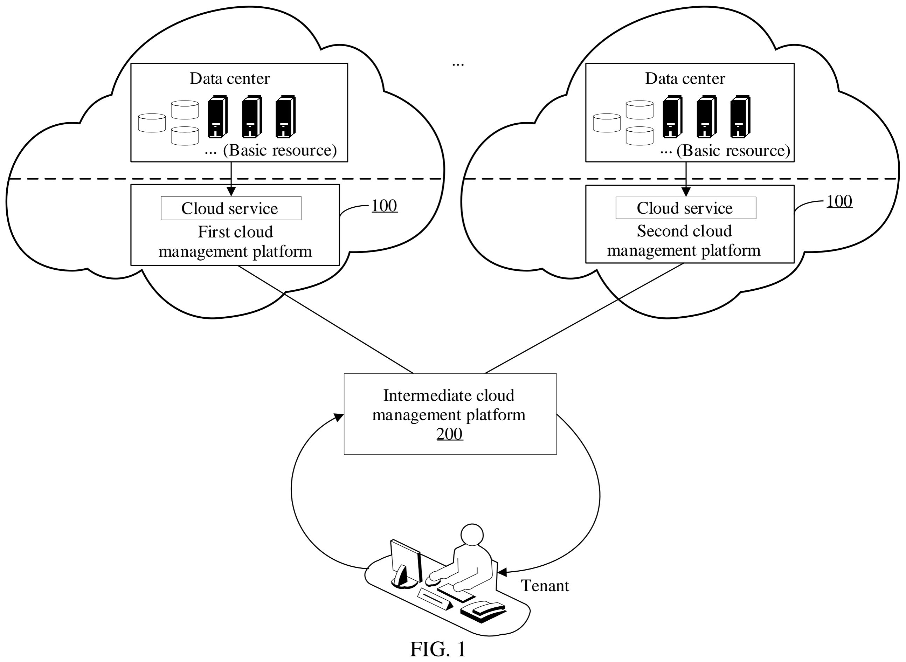

FIG. 1 is an example of a diagram of a multi-cloud market scenario. As shown in FIG. 1, the scenario includes a plurality of cloud management platforms 100 and an intermediate cloud management platform 200.

Each of the plurality of cloud management platforms 100 is deployed in a data center provided by one cloud service provider. The data center provided by the cloud service provider includes a large quantity of basic resources owned by a first cloud service provider, for example, a computing resource, a storage resource, and a network resource. The computing resource may be a computing device, for example, a server and a BMS, the storage resource may be a storage device, for example, an SSD and an HDD, and the network resource may be a network device, for example, a router and a switch. The data center provided by the cloud service provider may be a central cloud data center, or may be an edge cloud data center. Compared with the central cloud data center, the edge cloud data center is geographically closer to a terminal computing device (for example, a terminal server, a smartphone, or a notebook computer) and has fewer basic resources.

Each cloud management platform 100 may be one or more servers in the data center, or may be a software apparatus deployed on a server or a virtual machine (virtual machine, VM) in the data center. In other words, each cloud management platform 100 may be deployed on a plurality of servers in the data center in a distributed manner, or deployed on a plurality of VMs in the data center in a distributed manner, or deployed on a server and a VM in the data center in a distributed manner.

Each cloud management platform 100 is configured to manage a cloud service provided by the corresponding cloud service provider. For example, if a cloud service provider uses a basic resource in a data center of the cloud service provider to provide a VM for a tenant, a cloud management platform 100 deployed in the data center of the cloud service provider has VM management functions such as creating a VM, performing full life cycle management (such as power-on, power-off, specification change, migration, and release) on the VM, and deploying a tenant service on the VM.

In some embodiments, the plurality of cloud management platforms 100 may include a first cloud management platform and a second cloud management platform shown in FIG. 1. The first cloud management platform is deployed in a data center provided by the first cloud service provider, and is configured to manage a cloud service provided by the first cloud service provider. The second cloud management platform is deployed in a data center corresponding to a second cloud service provider, and is configured to manage a cloud service provided by the second cloud service provider.

The intermediate cloud management platform 200 may be jointly created by a plurality of cloud service providers (including the first cloud service provider and the second cloud service provider), or may be created by a third-party organization. The intermediate cloud management platform 200 is configured to connect the plurality of cloud management platforms 100. Specifically, the plurality of cloud management platforms 100 may register respectively managed cloud services with the intermediate cloud management platform 200, and correspondingly, the intermediate cloud management platform 200 provides the foregoing registered cloud services for the tenant.

In some embodiments, the intermediate cloud management platform 200 may connect the plurality of cloud management platforms 100 in a plurality of manners. For example, the intermediate cloud management platform 200 may provide a user interface (user interface, UI) for the plurality of cloud management platforms 100 to perform an operation, or may provide an application programming interface (application programming interface, API) for the plurality of cloud management platforms 100 to invoke, or may provide a software development kit (software development kit, SDK) for the plurality of cloud management platforms 100 to use.

In some embodiments, some cloud services provided by the plurality of cloud service providers are similar, that is, similar cloud services exist in the foregoing registered cloud services. For the similar cloud services, the intermediate cloud management platform 200 indicates, based on the inter-cloud capability negotiation method provided in embodiments of this application, cloud management platforms 100 configured to provide the similar cloud services to perform negotiation, and determine, based on a result of the negotiation, a cloud service to be provided for the tenant.

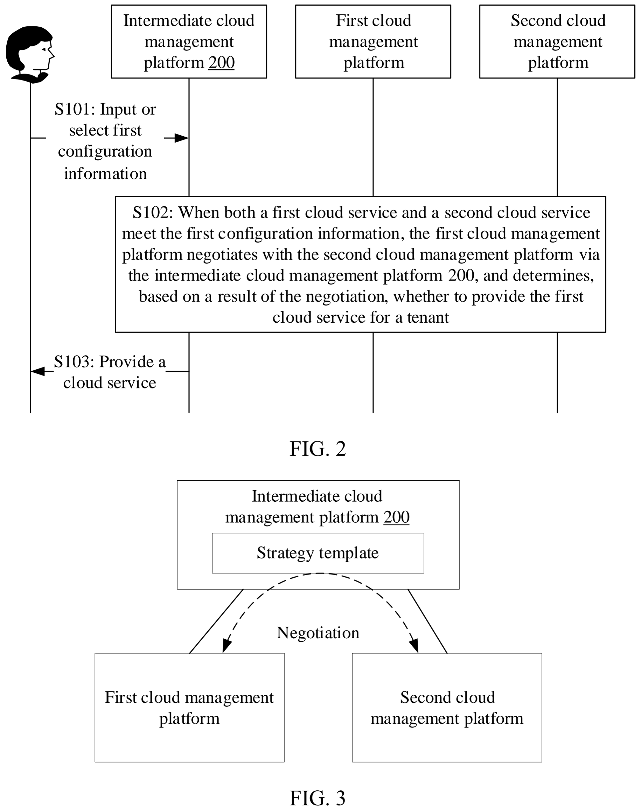

The following describes in detail, with reference to FIG. 2 to FIG. 10, the inter-cloud capability negotiation method provided in embodiments of this application by using an example in which a first cloud service provided by a first cloud management platform and a second cloud service provided by a second cloud management platform are similar.

S101: An intermediate cloud management platform 200 receives first configuration information that is of a required cloud service and that is input or selected by a tenant.

Specifically, the intermediate cloud management platform 200 provides an access interface (for example, a UI or an API), and the tenant remotely accesses, by operating a client (for example, a browser), the access interface provided by the intermediate cloud management platform 200, to register a cloud account and a password on the intermediate cloud management platform 200. After the registration succeeds, the tenant may log in to the intermediate cloud management platform 200 by using the cloud account and the password, and then the intermediate cloud management platform 200 performs authentication on the cloud account and the password. After the authentication succeeds, the tenant may input or select the first configuration information of the required cloud service via the intermediate cloud management platform 200. The first configuration information may include a type of the cloud service, for example, an encryption service or a storage service.

S102: When both the first cloud service and the second cloud service meet the first configuration information, the first cloud management platform negotiates with the second cloud management platform via the intermediate cloud management platform 200, and determines, based on a result of the negotiation, whether to provide the first cloud service for the tenant.

This step may specifically include the following three implementations.

Manner 1: As shown in FIG. 3, the intermediate cloud management platform 200 stores a strategy template. In this case, when both the first cloud service and the second cloud service meet the first configuration information, the intermediate cloud management platform 200 may compare the first cloud service with the second cloud service based on the strategy template, and select one cloud service from the first cloud service and the second cloud service. When the intermediate cloud management platform 200 selects the first cloud service, the intermediate cloud management platform 200 indicates the first cloud management platform to provide the first cloud service for the tenant. When the intermediate cloud management platform 200 selects the second cloud service, the intermediate cloud management platform 200 indicates the second cloud management platform to provide the second cloud service for the tenant.

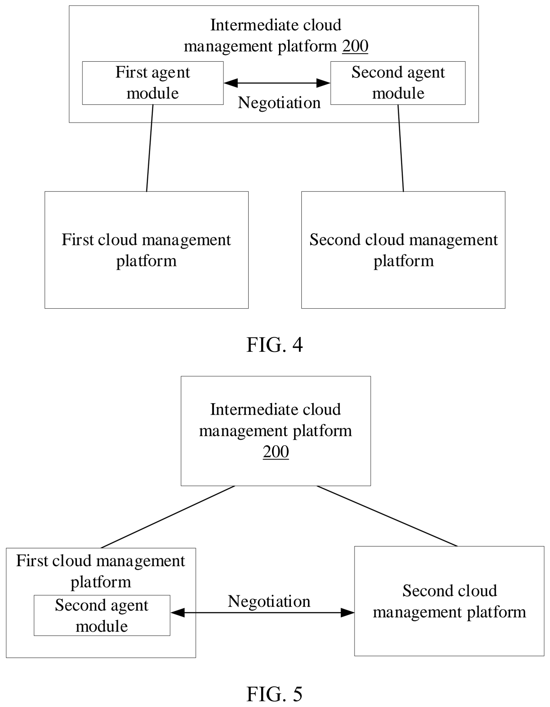

Manner 2: As shown in FIG. 4, the intermediate cloud management platform 200 includes a first agent module and a second agent module, where the first agent module is connected to the first cloud management platform, and the second agent module is connected to the second cloud management platform. When both the first cloud service and the second cloud service meet the first configuration information, the first cloud management platform negotiates with the second cloud management platform by using the first agent module and the second agent module, and determines, based on a result of the negotiation, whether to provide the first cloud service for the tenant.

Manner 3: As shown in FIG. 5, the first cloud management platform includes a second agent module, and the second cloud management platform is connected to the second agent module. In this scenario, the intermediate cloud management platform 200 sends a notification message to the first cloud management platform, and in response to the notification message sent by the intermediate cloud management platform, the first cloud management platform negotiates with the second cloud management platform by using the second agent module, and determines, based on a result of the negotiation, whether to provide the first cloud service for the tenant.

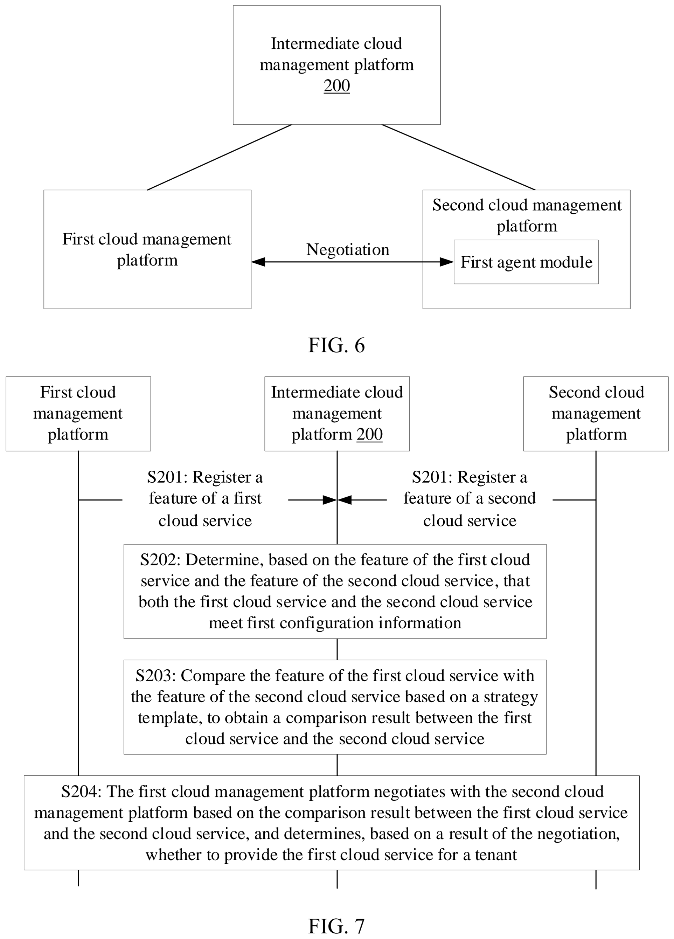

Manner 4: As shown in FIG. 6, the second cloud management platform includes a first agent module, and the first cloud management platform is connected to the first agent module. In this scenario, after obtaining the first configuration information, the intermediate cloud management platform 200 sends a notification message to the second cloud management platform. In response to the notification message sent by the intermediate cloud management platform, the second cloud management platform negotiates with the first cloud management platform by using the first agent module, and determines, based on a result of the negotiation, whether to provide the first cloud service for the tenant.

S103: The intermediate cloud management platform 200 provides the cloud service for the tenant based on the result of the negotiation.

Specifically, when the result of the negotiation indicates to provide the first cloud service for the tenant, the intermediate cloud management platform 200 provides the first cloud service for the tenant by using the first cloud management platform. When the result of the negotiation indicates to provide the second cloud service for the tenant, the intermediate cloud management platform 200 provides the second cloud service for the tenant by using the second cloud management platform.

According to S101 to S103, when using a cloud service, the tenant may directly input or select configuration information of a required cloud service to or on the intermediate cloud management platform 200, and then the intermediate cloud management platform 200 provides the corresponding cloud service for the tenant according to a requirement of the tenant. In this process, the tenant does not need to select a cloud service provider to provide a cloud service for the tenant, so that the tenant can have better use experience.

The following describes Manner 1 in S102 in more detail with reference to FIG. 7.

S201: A first cloud management platform registers a feature of a first cloud service with an intermediate cloud management platform 200, and a second cloud management platform registers a feature of a second cloud service with the intermediate cloud management platform 200.

A feature of a cloud service is used to describe a capability of the cloud service. For example, a feature of an encryption service may include a function (an encryption function herein), an encryption rate, an encryption algorithm used in an encryption process, encryption reliability, a use price, and the like of the service. For another example, a feature of a storage service may include a function (a storage function herein), a model of a storage device used in a storage process, a storage capacity, a read/write (input/output, I/O) speed, a service life, a use price, and the like of the service.

Because the first cloud management platform is configured to manage a cloud service (including the first cloud service) provided by a first cloud service provider, the first cloud management platform may obtain the feature of the first cloud service, and then send the feature of the first cloud service to the intermediate cloud management platform 200. Correspondingly, the intermediate cloud management platform 200 receives the feature of the first cloud service sent by the first cloud management platform, and stores the feature of the first cloud service, to complete registration of the feature of the first cloud service.

Similarly, because the second cloud management platform is configured to manage a cloud service (including the second cloud service) provided by a second cloud service provider, the second cloud management platform may obtain the feature of the second cloud service, and then send the feature of the second cloud service to the intermediate cloud management platform 200. Correspondingly, the intermediate cloud management platform 200 receives the feature of the second cloud service sent by the second cloud management platform, and stores the feature of the second cloud service, to complete registration of the feature of the second cloud service.

In some embodiments, it can be learned from the foregoing description that the intermediate cloud management platform 200 provides a UI, an API, or an SDK to connect a plurality of cloud management platforms 100. Therefore, the first cloud management platform may send the feature of the first cloud service to the intermediate cloud management platform by using the UI, the API, or the SDK. Similarly, the second cloud management platform may also send the feature of the second cloud service to the intermediate cloud management platform by using the UI, the API, or the SDK.

S202: The intermediate cloud management platform 200 determines, based on the feature of the first cloud service and the feature of the second cloud service, that both the first cloud service and the second cloud service meet first configuration information.

Specifically, after obtaining the first configuration information, the intermediate cloud management platform 200 matches the first configuration information with the feature of the first cloud service and the feature of the second cloud service respectively, and determines, based on a matching result, that the feature of the first cloud service and the feature of the second cloud service meet the first configuration information. For example, the first configuration information includes that a tenant needs a cloud service that can implement an encryption function, the feature of the first cloud service includes that the first cloud service has an encryption function, and the feature of the second cloud service includes that the second cloud service has an encryption function. In this case, the first configuration information matches both the feature of the first cloud service and the feature of the second cloud service. In other words, both the first cloud service and the second cloud service meet the first configuration information.

S203: The intermediate cloud management platform 200 compares the feature of the first cloud service with the feature of the second cloud service based on a strategy template, to obtain a comparison result between the first cloud service and the second cloud service.

The strategy template includes one or any combination of the following: a template set by the tenant, a template set by the intermediate cloud management platform 200, and a template set by any one or more cloud management platforms 100.

(1) The intermediate cloud management platform 200 may obtain, in the following manner, the template set by the tenant.

The tenant inputs or selects second configuration information by using an access interface provided by the intermediate cloud management platform 200, and the intermediate cloud management platform 200 generates a corresponding template based on the second configuration information. The second configuration information may include a requirement of the tenant for a required cloud service in terms of performance, a use price, a specification of a used related device, and the like.

For example, it is assumed that the cloud service required by the tenant is the encryption service, and a requirement of the tenant on performance of the encryption service (namely, the second configuration information) is that a higher encryption speed is better. In this case, after the intermediate cloud management platform 200 obtains the second configuration information, the intermediate cloud management platform 200 generates a corresponding template, that is, {"metric_name": encryption speed, "strategy": fastest}. In the template, "metric_name" indicates a comparison parameter, and the comparison parameter herein is the encryption speed; and "strategy" indicates a comparison strategy, and the comparison strategy herein is to select a cloud service with a highest encryption speed. That is, the template indicates to select an encryption service with the highest encryption speed from different encryption services.

(2) The template set by the intermediate cloud management platform 200 may be preset by a cloud service provider or a third-party organization that creates the intermediate cloud management platform 200, or may be dynamically adjusted by the intermediate cloud management platform 200 based on an actual situation.

For example, the cloud service required by the tenant is still the encryption service. It is assumed that the template set by the intermediate cloud management platform 200 is {"metric_name": encryption speed, "strategy": greater than m GB/s}. In the template, "metric_name" indicates a comparison parameter, and the comparison parameter herein is an encryption speed; and "strategy" indicates a comparison strategy, and the comparison strategy herein is to select a cloud service with an encryption speed greater than m GB/s (m is a natural number). That is, the template indicates to select an encryption service with an encryption speed greater than m GB/s from different encryption services. After a period of time, a plurality of cloud service providers (including the first cloud service provider and the second cloud service provider) upgrade encryption services provided by the plurality of cloud service providers, that is, encryption speeds are improved. In response to this, the intermediate cloud management platform 200 may correspondingly adjust the foregoing template to {"metric_name": encryption speed, "strategy": greater than n GB/s}, where n is a natural number greater than m, and the template indicates to select an encryption service with an encryption speed greater than n GB/s from different encryption services.

(3) The intermediate cloud management platform 200 may obtain, in the following manner, the template set by any one or more cloud management platforms 100.

The first cloud management platform is used as an example. When registering the feature of the first cloud service with the intermediate cloud management platform 200, the first cloud management platform may enable the intermediate cloud management platform 200 to obtain a template set by the first cloud management platform. Specifically, the first cloud management platform sends the feature of the first cloud service to the intermediate cloud management platform 200 in a form of a locally set template. Correspondingly, the intermediate cloud management platform 200 receives the feature of the first cloud service sent by the first cloud management platform. Because the feature of the first cloud service is recorded in a form of the template set by the first cloud management platform, the intermediate cloud management platform 200 may obtain, based on the feature of the first cloud service, the template set by the first cloud management platform.

In some embodiments, the first cloud management platform may set a template based on the feature of the first cloud service. For example, the cloud service required by the tenant is still the encryption service. It is assumed that the first cloud service is more advantageous than the second cloud service in terms of encryption speeds (that is, an encryption speed of the first cloud service is higher than an encryption speed of the second cloud service). In this case, the first cloud management platform may set the following template: {"metric_name": encryption speed, "strategy": greater than k GB/s}, where k is a natural number. Then, the first cloud management platform sends the feature (the encryption speed herein) of the first cloud service to the intermediate cloud management platform 200 in a form of the foregoing template. In this way, the intermediate cloud management platform may determine that the encryption speed of the first cloud service is greater than k GB/s, and may further obtain the foregoing template.

It should be understood that the strategy template in the foregoing example is merely used as an example. For example, in addition to being represented in the foregoing key value (key value, KV) form, the strategy template may also be represented in another form. For another example, in addition to the encryption speed, the comparison parameter in the strategy template may further include a use price, an encryption algorithm used in an encryption process, or the like. In addition, in addition to selecting an encryption service with a highest encryption speed, an encryption service with an encryption speed greater than m GB/s, or the like, the comparison strategy may alternatively include selecting an encryption service with a highest encryption speed when the use price is less than a threshold.

It should be further understood that, when the strategy template includes any two or three of the template set by the tenant, the template set by the intermediate cloud management platform 200, and the template set by any one or more cloud management platforms 100, the intermediate cloud management platform 200 may consider, from a plurality of perspectives, which cloud service is more suitable for the tenant.

S204: The first cloud management platform negotiates with the second cloud management platform based on the comparison result between the first cloud service and the second cloud service, and determines, based on a result of the negotiation, whether to provide the first cloud service for the tenant.

Specifically, the intermediate cloud management platform 200 sends a first indication message to the first cloud management platform based on the comparison result between the first cloud service and the second cloud service. Correspondingly, the first cloud management platform receives the first indication message sent by the intermediate cloud management platform 200. Then, the first cloud management platform determines, based on the first indication message, whether to provide the first cloud service for the tenant. The first indication message may include the comparison result between the first cloud service and the second cloud service (for example, the first cloud service is more suitable for the tenant than the second cloud service), a selection result of the intermediate cloud management platform 200 (for example, the first cloud service or the second cloud service is selected), or a message for notifying the first cloud management platform of providing or not providing the first cloud service.

Optionally, the intermediate cloud management platform 200 further sends a second indication message to the second cloud management platform based on the comparison result between the first cloud service and the second cloud service. Correspondingly, the second cloud management platform receives the second indication message sent by the intermediate cloud management platform 200. Then, the second cloud management platform determines, based on the second indication message, whether the first cloud management platform provides the first cloud service for the tenant. Similar to the first indication message, the second indication message may include the comparison result between the first cloud service and the second cloud service (for example, the first cloud service is more suitable for the tenant than the second cloud service), the selection result of the intermediate cloud management platform 200 (for example, the first cloud service or the second cloud service is selected), or a message for notifying the second cloud management platform of providing or not providing the second cloud service.

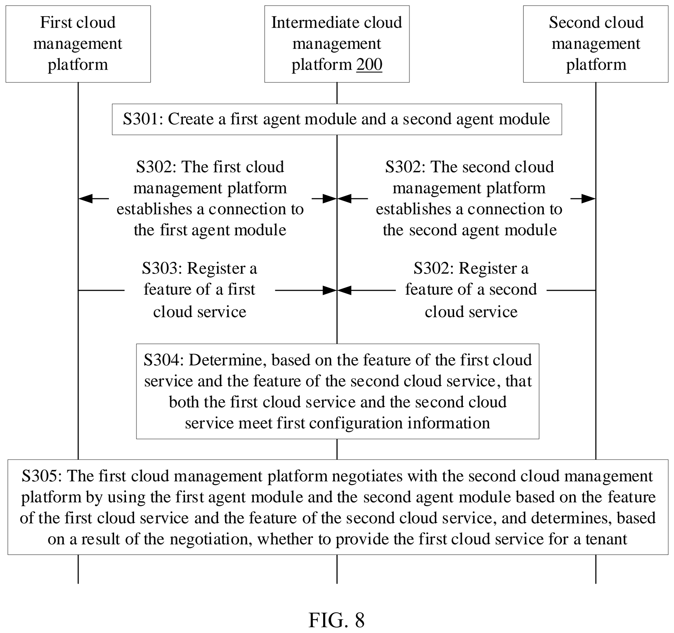

The following describes Manner 2 in S102 in more detail with reference to FIG. 8.

S301: An intermediate cloud management platform 200 creates a first agent module and a second agent module.

In some embodiments, a first cloud management platform sends configuration information of the first agent module to the intermediate cloud management platform 200, and a second cloud management platform sends configuration information of the second agent module to the intermediate cloud management platform 200. Correspondingly, the intermediate cloud management platform 200 receives the configuration information of the first agent module sent by the first cloud management platform and the configuration information of the second agent module sent by the second cloud management platform, where the configuration information of the first agent module includes program code of the first agent module, the configuration information of the second agent module includes program code of the second agent module. Then, the intermediate cloud management platform 200 creates the first agent module based on the configuration information of the first agent module, and creates the second agent module based on the configuration information of the second agent module.

It should be understood that, during actual application, the intermediate cloud management platform 200 may alternatively create the first agent module or the second agent module in another manner. For a specific implementation process of creating the first agent module or the second agent module in another manner, refer to the following related description in S303.

S302: The first cloud management platform establishes a connection to the first agent module, and the second cloud management platform establishes a connection to the second agent module.

The connection between the first cloud management platform and the first agent module and the connection between the second cloud management platform and the second agent module each may be a long connection. During specific implementation, the first cloud management platform and the first agent module may establish the long connection through transmission control protocol (transmission control protocol, TCP) three-way handshake. Similarly, the second cloud management platform and the second agent module may also establish the long connection through TCP three-way handshake.

S303: The first cloud management platform registers a feature of a first cloud service with the intermediate cloud management platform 200, and the second cloud management platform registers a feature of a second cloud service with the intermediate cloud management platform 200.

In some embodiments, the first cloud management platform registers the feature of the first cloud service with the intermediate cloud management platform 200 by using the first agent module, and the second cloud management platform registers the feature of the second cloud service with the intermediate cloud management platform 200 by using the second agent module. Specifically, the first cloud management platform sends the feature of the first cloud service to the intermediate cloud management platform 200 by invoking the first agent module. Correspondingly, the intermediate cloud management platform 200 receives the feature of the first cloud service sent by the first cloud management platform. Then, the intermediate cloud management platform 200 stores the feature of the first cloud service, to complete registration of the feature of the first cloud service. The second cloud management platform sends the feature of the second cloud service to the intermediate cloud management platform 200 by invoking the second agent module. Correspondingly, the intermediate cloud management platform 200 receives the feature of the second cloud service sent by the second cloud management platform. Then, the intermediate cloud management platform 200 stores the feature of the second cloud service, to complete registration of the feature of the second cloud service.

In some other embodiments, consistent with the description in S202, the first cloud management platform may alternatively send the feature of the first cloud service to the intermediate cloud management platform by using a UI, an API, or an SDK provided by the intermediate cloud management platform 200. Similarly, the second cloud management platform may also send the feature of the second cloud service to the intermediate cloud management platform by using the UI, the API, or the SDK.

Optionally, the intermediate cloud management platform 200 may alternatively create the first agent module and the second agent module in the following manner: After the first cloud management platform registers, with the intermediate cloud management platform 200 by using the UI, the API, or the SDK, a feature of any one or more cloud services (including the first cloud service) managed by the first cloud management platform, the intermediate cloud management platform 200 locally creates the first agent module; and similarly, after the second cloud management platform registers, with the intermediate cloud management platform 200 by using the UI, the API, or the SDK, a feature of any one or more cloud services (including the second cloud service) managed by the second cloud management platform, the intermediate cloud management platform 200 locally creates the second agent module.

It should be understood that the feature of the first cloud service and the feature of the second cloud service in this step are consistent with the feature of the first cloud service and the feature of the second cloud service described in S201. Therefore, content of the feature of the first cloud service and the feature of the second cloud service is not described herein again.

S304: The intermediate cloud management platform 200 determines, based on the feature of the first cloud service and the feature of the second cloud service, that both the first cloud service and the second cloud service meet first configuration information.

It should be understood that a specific implementation process of this step is consistent with that of S202. Therefore, details are not described herein again.

S305: The first cloud management platform negotiates with the second cloud management platform by using the first agent module and the second agent module based on the feature of the first cloud service and the feature of the second cloud service, and determines, based on a result of the negotiation, whether to provide the first cloud service for a tenant.

Specifically, after determining that both the first cloud service and the second cloud service meet the first configuration information, the intermediate cloud management platform 200 indicates the first agent module to negotiate with the second agent module based on the feature of the first cloud service and the feature of the second cloud service. Then, the intermediate cloud management platform 200 sends a first indication message to the first cloud management platform based on the result of the negotiation. Correspondingly, the first cloud management platform receives the first indication message sent by the intermediate cloud management platform 200. Then, the first cloud management platform determines, based on the first indication message, whether to provide the first cloud service for the tenant. Herein, the first indication message may include the result of the negotiation (for example, selecting to provide the first cloud service for the tenant or selecting to provide the second cloud service for the tenant), or a message for notifying the first cloud management platform of providing or not providing the first cloud service.

Optionally, the intermediate cloud management platform 200 further sends a second indication message to the second cloud management platform based on the result of the negotiation. Correspondingly, the second cloud management platform receives the second indication message sent by the intermediate cloud management platform 200. Then, the second cloud management platform determines, based on the second indication message, whether the first cloud management platform provides the first cloud service for the tenant. Herein, the second indication message may include the result of the negotiation (for example, selecting to provide the first cloud service for the tenant or selecting to provide the second cloud service for the tenant), or a message for notifying the second cloud management platform of providing or not providing the second cloud service.

In some embodiments, the first agent module and the second agent module each include at least one strategy. The at least one strategy may include a game strategy, for example, a Nash equilibrium strategy or generative adversarial nets (generative adversarial nets, GAN), and may further include a round-robin strategy, an eventual consistency algorithm (for example, gossip), a first-in-first-out (first-in-first-out, FIFO) algorithm, and the like. If the first agent module and the second agent module each include a target strategy, that the first agent module negotiates with the second agent module based on the feature of the first cloud service and the feature of the second cloud service includes: The first agent module negotiates with the second agent module by using the target strategy based on the feature of the first cloud service and the feature of the second cloud service.

For example, when the target strategy is the Nash equilibrium strategy or the GAN, the first agent module and the second agent module may provide, through negotiation, a cloud service with a more favorable price and better performance for the tenant as much as possible, and a result of the negotiation may be either the first cloud service or the second cloud service. When the target strategy is the round-robin strategy, a result of the negotiation may be either the first cloud service or the second cloud service, that is, the first cloud service and the second cloud service may be provided for a plurality of tenants in turn. When the target strategy is the eventual consistency algorithm, a result of the negotiation may be that either the first cloud service or the second cloud service is provided for the tenant this time, but it should be ensured that the other cloud service is subsequently provided for another tenant. When the target strategy is the FIFO algorithm, a result of the negotiation may be that providing is performed for a corresponding tenant in a sequence of registering the first cloud service and the second cloud service.

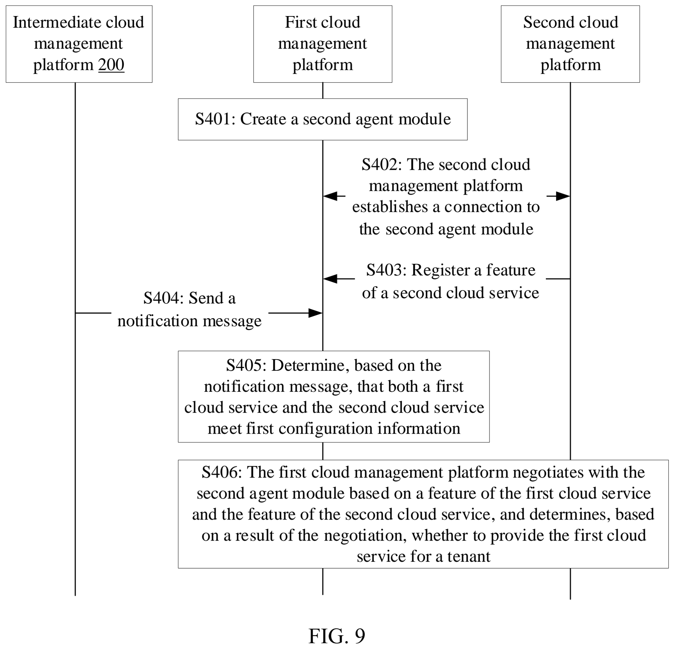

The following describes Manner 3 in S102 in more detail with reference to FIG. 9.

S401: A first cloud management platform creates a second agent module.

In some embodiments, a second cloud management platform sends configuration information of the second agent module to the first cloud management platform. Correspondingly, the first cloud management platform receives the configuration information of the second agent module sent by the second cloud management platform. Then, the first cloud management platform creates the second agent module based on the configuration information of the second agent module. The configuration information of the second agent module includes program code of the second agent module.

It should be understood that, during actual application, the first cloud management platform may alternatively create the second agent module in another manner. For a specific implementation process of creating the second agent module in another manner, refer to the following related description in S403.

S402: The second cloud management platform establishes a connection to the second agent module.

The connection between the second cloud management platform and the second agent module may be a long connection. During specific implementation, the second cloud management platform and the second agent module may establish the long connection through TCP three-way handshake.

S403: The second cloud management platform registers a feature of a second cloud service with the first cloud management platform.

In some embodiments, the first cloud management platform includes a first registration module (for example, a UI, an API, or an SDK) configured to register a feature of a cloud service. Therefore, the second cloud management platform may register the feature of the second cloud service with the first cloud management platform by using the first registration module. Specifically, the second cloud management platform may send the feature of the second cloud service to the first cloud management platform by invoking the first registration module. Correspondingly, the first cloud management platform receives the feature of the second cloud service sent by the second cloud management platform. Then, the first cloud management platform stores the feature of the second cloud service, to complete registration of the feature of the second cloud service.

Optionally, the first cloud management platform may alternatively create the first agent module in the following manner: After the second cloud management platform registers, with the first cloud management platform by using the first registration module, a feature of any one or more cloud services (including the second cloud service) managed by the second cloud management platform, the first cloud management platform locally creates the second agent module.

In some other embodiments, the second agent module has a function of the first registration module. Therefore, the second cloud management platform may alternatively register the feature of the second cloud service with the first cloud management platform by using the second agent module. Specifically, the second cloud management platform sends the feature of the second cloud service to the first cloud management platform by invoking the second agent module. Correspondingly, the first cloud management platform receives the feature of the second cloud service sent by the second cloud management platform. Then, the first cloud management platform stores the feature of the second cloud service, to complete registration of the feature of the second cloud service.

It should be understood that the feature of the second cloud service in this step is consistent with the feature of the second cloud service described in S201. Therefore, content of the feature of the second cloud service is not described herein again.

S404: An intermediate cloud management platform 200 sends a notification message to the first cloud management platform.

Specifically, the intermediate cloud management platform 200 generates the notification message based on first configuration information, and then sends the notification message to the first cloud management platform. Correspondingly, the first cloud management platform receives the notification message sent by the intermediate cloud management platform 200. The notification message includes the first configuration information.

S405: The first cloud management platform determines, based on the notification message, that both a first cloud service and the second cloud service meet the first configuration information.

Specifically, the first cloud management platform obtains the first configuration information based on the notification message, and then determines, based on a feature of the first cloud service and the feature of the second cloud service, that both the first cloud service and the second cloud service meet the first configuration information.

Further, because the first cloud management platform is configured to manage a cloud service (including the first cloud service) provided by a first cloud service provider, the first cloud management platform may obtain the feature of the first cloud service. In this case, that the first cloud management platform determines, based on the feature of the first cloud service and the feature of the second cloud service, that both the first cloud service and the second cloud service meet the first configuration information includes: The first cloud management platform matches the first configuration information with the feature of the first cloud service and the feature of the second cloud service respectively, and determines, based on a matching result, that the feature of the first cloud service and the feature of the second cloud service meet the first configuration information. It should be understood that the feature of the first cloud service in this step is consistent with the feature of the first cloud service described in S201. Therefore, content of the feature of the first cloud service is not described herein again.

S406: The first cloud management platform negotiates with the second agent module based on the feature of the first cloud service and the feature of the second cloud service, and determines, based on a result of the negotiation, whether to provide the first cloud service for a tenant.

In some embodiments, the first cloud management platform and the second agent module each include at least one strategy. The at least one strategy may include a game strategy, for example, a Nash equilibrium strategy or GAN, and may further include a round-robin strategy, an eventual consistency algorithm (for example, gossip), an FIFO algorithm, and the like. If the first cloud management platform and the second agent module each include a target strategy, that the first cloud management platform negotiates with the second agent module based on the feature of the first cloud service and the feature of the second cloud service, and determines whether to provide the first cloud service for the tenant includes: The first cloud management platform negotiates with the second agent module by using the target strategy based on the feature of the first cloud service and the feature of the second cloud service, and then determines, based on a result of the negotiation, whether to provide the first cloud service for the tenant. For related descriptions of the target strategy, refer to S305.

Further, when the result of the negotiation indicates to provide the first cloud service for the tenant, the first cloud management platform further provides the first cloud service for the tenant. When the result of the negotiation indicates to provide the second cloud service for the tenant, the first cloud management platform further notifies the second cloud management platform of providing the second cloud service for the tenant.

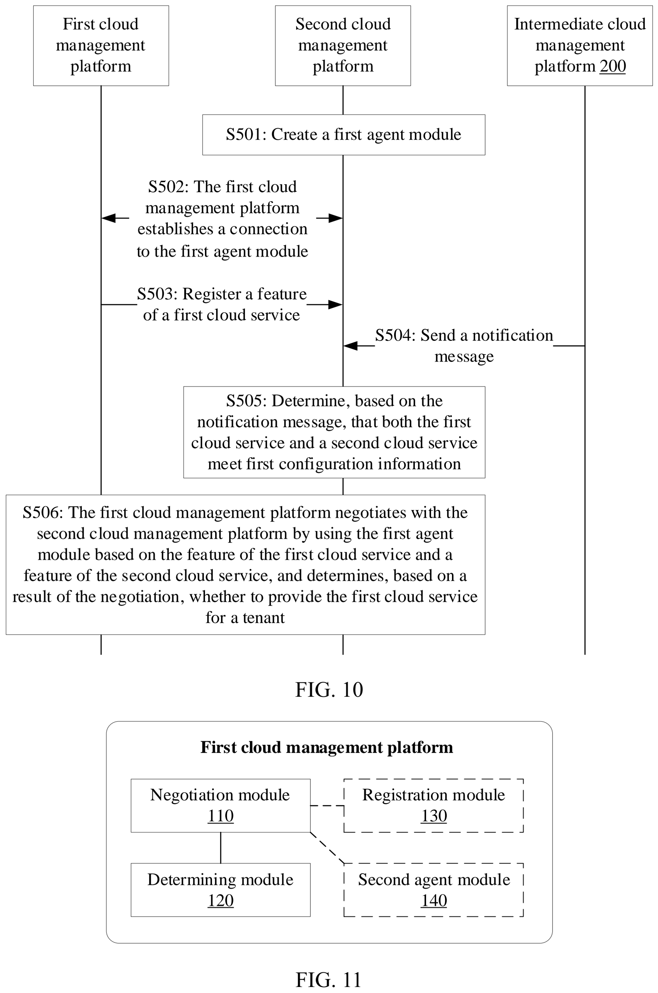

The following describes Manner 4 in S102 in more detail with reference to FIG. 10.

S501: A second cloud management platform creates a first agent module.

In some embodiments, a first cloud management platform sends configuration information of the first agent module to the second cloud management platform. Correspondingly, the second cloud management platform receives the configuration information of the first agent module. Then, the second cloud management platform creates the first agent module based on the configuration information of the first agent module. The configuration information of the first agent module includes program code of the first agent module.

It should be understood that, during actual application, the second cloud management platform may alternatively create the first agent module in another manner. For a specific implementation process of creating the first agent module in another manner, refer to the following related description in S503.

S502: The first cloud management platform establishes a connection to the first agent module.

The connection between the first cloud management platform and the first agent module may be a long connection. During specific implementation, the first cloud management platform and the first agent module may establish the long connection through TCP three-way handshake.

S503: The first cloud management platform registers a feature of a first cloud service with the second cloud management platform.

In some embodiments, the second cloud management platform includes a second registration module (for example, a UI, an API, or an SDK) configured to register a feature of a cloud service. Therefore, the first cloud management platform may register the feature of the first cloud service with the second cloud management platform by using the second registration module. Specifically, the first cloud management platform may send the feature of the first cloud service to the second cloud management platform by invoking the second registration module. Correspondingly, the second cloud management platform receives the feature of the first cloud service sent by the first cloud management platform. Then, the second cloud management platform stores the feature of the first cloud service, to complete registration of the feature of the first cloud service.

Optionally, the second cloud management platform may alternatively create the first agent module in the following manner: After the first cloud management platform registers, with the second cloud management platform by using the second registration module, a feature of any one or more cloud services (including the first cloud service) managed by the first cloud management platform, the second cloud management platform locally creates the first agent module.

In some other embodiments, the first agent module has a function of the second registration module. Therefore, the first cloud management platform may alternatively register the feature of the first cloud service with the second cloud management platform by using the first agent module. Specifically, the first cloud management platform sends the feature of the first cloud service to the second cloud management platform by invoking the first agent module. Correspondingly, the second cloud management platform receives the feature of the first cloud service sent by the first cloud management platform. Then, the second cloud management platform stores the feature of the first cloud service, to complete registration of the feature of the first cloud service.

It should be understood that the feature of the first cloud service in this step is consistent with the feature of the first cloud service described in S201. Therefore, content of the feature of the first cloud service is not described herein again.

S504: An intermediate cloud management platform 200 sends a notification message to the second cloud management platform.

Specifically, the intermediate cloud management platform 200 generates the notification message based on first configuration information, and then sends the notification message to the second cloud management platform. Correspondingly, the second cloud management platform receives the notification message sent by the intermediate cloud management platform 200. The notification message includes the first configuration information.

S505: The second cloud management platform determines, based on the notification message, that both the first cloud service and a second cloud service meet the first configuration information.

Specifically, the second cloud management platform obtains the first configuration information based on the notification message, and determines, based on the feature of the first cloud service and a feature of the second cloud service, that both the first cloud service and the second cloud service meet the first configuration information.

Further, because the second cloud management platform is configured to manage a cloud service (including the second cloud service) provided by a second cloud service provider, the second cloud management platform may obtain the feature of the second cloud service. In this case, that the second cloud management platform determines, based on the feature of the first cloud service and the feature of the second cloud service, that both the first cloud service and the second cloud service meet the first configuration information includes: The second cloud management platform matches the first configuration information with the feature of the first cloud service and the feature of the second cloud service respectively, and determines, based on a matching result, that the feature of the first cloud service and the feature of the second cloud service meet the first configuration information. It should be understood that the feature of the second cloud service in this step is consistent with the feature of the second cloud service described in S201. Therefore, content of the feature of the second cloud service is not described herein again.

S506: The first cloud management platform negotiates with the second cloud management platform by using the first agent module based on the feature of the first cloud service and the feature of the second cloud service, and determines, based on a result of the negotiation, whether to provide the first cloud service for a tenant.

In some embodiments, the second cloud management platform and the first agent module each include at least one strategy. The at least one strategy may include a game strategy, for example, a Nash equilibrium strategy or GAN, and may further include a round-robin strategy, an eventual consistency algorithm (for example, gossip), an FIFO algorithm, and the like. If the second cloud management platform and the first agent module each include a target strategy, that the first cloud management platform negotiates with the second cloud management platform by using the first agent module based on the feature of the first cloud service and the feature of the second cloud service includes: The first cloud management platform invokes the first agent module, then the first agent module negotiates with the second cloud management platform by using the target strategy based on the feature of the first cloud service and the feature of the second cloud service, and after that, the first cloud management platform determines, based on a result of the negotiation, whether to provide the first cloud service for the tenant. For related descriptions of the target strategy, refer to S305.

Further, when the result of the negotiation indicates to provide the first cloud service for the tenant, the second cloud management platform further notifies the first cloud management platform of providing the first cloud service for the tenant. When the result of the negotiation indicates to provide the second cloud service for the tenant, the second cloud management platform further provides the second cloud service for the tenant.

The inter-cloud capability negotiation method provided in embodiments of this application is described above in detail. The following describes structures of the cloud management platform 100 (the first cloud management platform is used as an example) and the intermediate cloud management platform 200 in the foregoing method embodiments with reference to FIG. 11 to FIG. 14.

FIG. 11 is an example of a diagram of a structure of a first cloud management platform. As shown in FIG. 11, the first cloud management platform includes a negotiation module 110 and a determining module 120.

The negotiation module 110 is configured to perform a related step of negotiating with the second cloud management platform via the intermediate cloud management platform 200 in S102. The determining module 120 is configured to perform a related step of determining, based on the result of the negotiation, whether to provide the first cloud service for the tenant in S102. A registration module 130 is configured to perform a related step of registering a feature of the first cloud service.

Optionally, the first cloud management platform further includes the registration module 130. The negotiation module 110 may be configured to perform a related step of negotiating with the second cloud management platform based on the comparison result between the first cloud service and the second cloud service in S204. The registration module 130 is configured to perform a related step of registering the feature of the first cloud service with the intermediate cloud management platform 200 in S201. Alternatively, the negotiation module 110 may be configured to perform a related step of sending the configuration information of the first agent module to the intermediate cloud management platform 200 in S301, a related step of establishing the connection to the first agent module in S302, and a related step of negotiating with the second cloud management platform by using the first agent module and the second agent module based on the feature of the first cloud service and the feature of the second cloud service in S305. The registration module 130 may be configured to perform a related step of registering the feature of the first cloud service with the intermediate cloud management platform 200 in S303. Alternatively, the negotiation module 110 may be configured to perform a related step of sending the configuration information of the first agent module to the second cloud management platform in S501, S502, and S506. The registration module 130 may be configured to perform S503.

Optionally, the first cloud management platform further includes a second agent module 140. The negotiation module 110 may be configured to perform S401, a related step of receiving the feature that is of the second cloud service and that is registered by the second cloud management platform in S403, the steps performed by the first cloud management platform in S404 and S405, and a related step of negotiating with the second agent module 140 based on the feature of the first cloud service and the feature of the second cloud service in S406. The second agent module 140 is configured to connect to the second cloud management platform, and perform a related step of negotiating with the first cloud management platform based on the feature of the first cloud service and the feature of the second cloud service in S406.

In this embodiment of this application, the negotiation module 110, the determining module 120, the registration module 130, and the second agent module 140 may all be implemented by using software, or may be implemented by using hardware. For example, the negotiation module 110 is used as an example to describe an implementation of the negotiation module 110. Similarly, for implementations of the determining module 120, the registration module 130, and the second agent module 140, refer to the implementation of the negotiation module 110.

As an example of a software function unit, the negotiation module 110 may include code run on a computing instance. The computing instance may include at least one of a physical host (a computing device), a virtual machine, and a container. Further, there may be one or more computing instances. For example, the negotiation module 110 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

As an example of a hardware function unit, the negotiation module 110 may include at least one computing device, for example, a server. Alternatively, the negotiation module 110 may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field programmable gate array (field programmable gate array, FPGA), a generic array logic (generic array logic, GAL), or any combination thereof.

The plurality of computing devices included in the negotiation module 110 may be distributed in a same region, or may be distributed in different regions. The plurality of computing devices included in the negotiation module 110 may be distributed in a same AZ, or may be distributed in different AZs. Similarly, the plurality of computing devices included in the negotiation module 110 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the negotiation module 110 may be configured to perform any step performed by the first cloud management platform in the foregoing method embodiments (including S101 to S103, S201 to S204, S301 to S305, S401 to S406, and S501 to S506). The determining module 120 may also be configured to perform any step performed by the first cloud management platform in the foregoing method embodiments. The registration module 130 may also be configured to perform any step performed by the first cloud management platform in the foregoing method embodiments. The second agent module 140 may also be configured to perform any step performed by the first cloud management platform in the foregoing method embodiments. Steps implemented by the negotiation module 110, the determining module 120, the registration module 130, and the second agent module 140 may be specified according to a requirement. The negotiation module 110, the determining module 120, the registration module 130, and the second agent module 140 implement different steps performed by the first cloud management platform in the inter-cloud capability negotiation method, to implement all functions of the first cloud management platform.

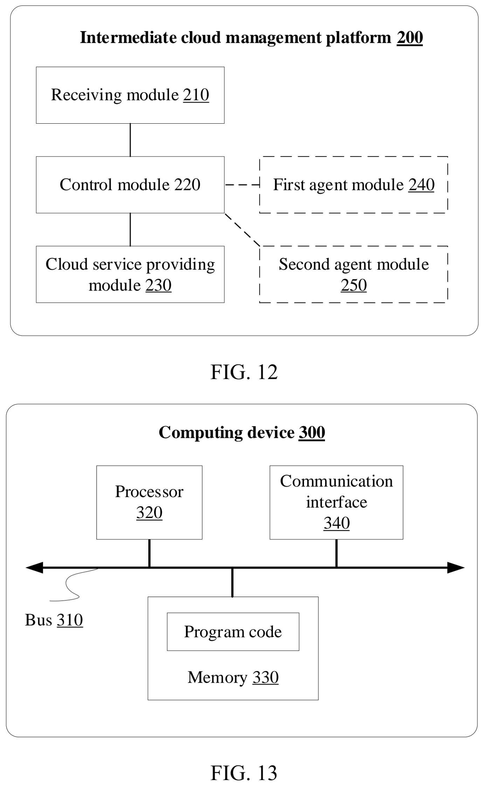

FIG. 12 is an example of a diagram of a structure of an intermediate cloud management platform. As shown in FIG. 12, the intermediate cloud management platform 200 includes a receiving module 210, a control module 220, and a cloud service providing module 230.

The receiving module 210 is configured to perform S101. The control module 220 is configured to perform a related step of indicating a first cloud management platform to negotiate with a second cloud management platform. The cloud service providing module 230 is configured to perform S103.

Optionally, the receiving module 210 is further configured to perform a related step of receiving the feature that is of the first cloud service and that is registered by the first cloud management platform and receiving the feature that is of the second cloud service and that is registered by the second cloud management platform in S201. The control module 220 may be configured to perform S202 and S203 and the step performed by the intermediate cloud management platform 200 in S204. Alternatively, the control module 220 is configured to perform S404 or S504.

Optionally, the intermediate cloud management platform 200 further includes a first agent module 240 and a second agent module 250. The receiving module 210 is configured to perform a related step of receiving the configuration information of the first agent module sent by the first cloud management platform and receiving the configuration information of the second agent module sent by the second cloud management platform in S301, and a related step of receiving the feature of the first cloud service sent by the first cloud management platform and receiving the feature of the second cloud service sent by the second cloud management platform in S303. The control module 220 may be configured to perform S304 and a related step of indicating the first agent module 240 to negotiate with the second agent module 250 based on the feature of the first cloud service and the feature of the second cloud service in S305. The first agent module 240 is configured to perform a related step of negotiating with the second agent module 250 in S305. The second agent module 250 is configured to perform a related step of negotiating with the first agent module 240 in S305.

In this embodiment of this application, the receiving module 210, the control module 220, the cloud service providing module 230, the first agent module 240, and the second agent module 250 may all be implemented by using software, or may be implemented by using hardware. For example, the following uses the control module 220 as an example to describe an implementation of the control module 220. Similarly, for implementations of the receiving module 210, the cloud service providing module 230, the first agent module 240, and the second agent module 250, refer to the implementation of the control module 220.

As an example of a software function unit, the control module 220 may include code run on a computing instance. The computing instance may include at least one of a physical host (a computing device), a virtual machine, and a container. Further, there may be one or more computing instances. For example, the control module 220 may include code run on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

As an example of a hardware function unit, the control module 220 may include at least one computing device, for example, a server. Alternatively, the control module 220 may be a device implemented by using an ASIC or a PLD, or the like.

The plurality of computing devices included in the control module 220 may be distributed in a same region, or may be distributed in different regions. The plurality of computing devices included in the control module 220 may be distributed in a same AZ, or may be distributed in different AZs. Similarly, the plurality of computing devices included in the control module 220 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the control module 220 may be configured to perform any step performed by the intermediate cloud management platform 200 in the foregoing method embodiments (including S101 to S103, S201 to S204, S301 to S305, S401 to S406, and S501 to S506). The receiving module 210 may also be configured to perform any step performed by the intermediate cloud management platform 200 in the foregoing method embodiments. The cloud service providing module 230 may also be configured to perform any step performed by the intermediate cloud management platform 200 in the foregoing method embodiments. The first agent module 240 may also be configured to perform any step performed by the intermediate cloud management platform 200 in the foregoing method embodiments. The second agent module 250 may also be configured to perform any step performed by the intermediate cloud management platform 200 in the foregoing method embodiments. Steps implemented by the receiving module 210, the control module 220, the cloud service providing module 230, the first agent module 240, and the second agent module 250 may be specified according to a requirement. The receiving module 210, the control module 220, the cloud service providing module 230, the first agent module 240, and the second agent module 250 implement different steps performed by the intermediate cloud management platform 200 in the inter-cloud capability negotiation method, to implement all functions of the intermediate cloud management platform 200.

Embodiments of this application further provide a computing device. The computing device is configured to implement functions of the first cloud management platform (or another cloud management platform 100) or the intermediate cloud management platform 200 in the foregoing method embodiments. As shown in FIG. 13, the computing device 300 includes a bus 310, a processor 320, a memory 330, and a communication interface 340. The processor 320, the memory 330, and the communication interface 340 communicate with each other through the bus 310. The computing device 300 may be a server or a terminal device. It should be understood that quantities of processors and memories in the computing device 300 are not limited in embodiments of this application.

The bus 310 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is indicated by using only one line in FIG. 13. However, it does not indicate that there is only one bus or only one type of bus. The bus 310 may include a path for transmitting information between components (for example, the memory 330, the processor 320, and the communication interface 340) of the computing device 300.

The processor 320 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 330 may include a volatile memory (volatile memory), for example, a random access memory (random access memory, RAM). The processor 320 may further include a non-volatile memory (non-volatile memory), for example, a read-only memory (read-only memory, ROM), a flash memory, a mechanical hard disk drive (hard disk drive, HDD), or a solid-state drive (solid-state drive, SSD).

The memory 330 stores executable program code. The executable program code is instructions for performing the inter-cloud capability negotiation method described above. In some embodiments, the executable program code stored in the memory 330 is instructions executed by the first cloud management platform. In this case, the processor 320 executes the executable program code to separately implement functions of the negotiation module 110, the determining module 120, the registration module 130, and the second agent module 140, to implement the functions of the first cloud management platform described above. In some other embodiments, the executable program code stored in the memory 330 is instructions executed by the intermediate cloud management platform 200. In this case, the processor 320 executes the executable program code to separately implement functions of the receiving module 210, the control module 220, the cloud service providing module 230, the first agent module 240, and the second agent module 250.

The communication interface 340 uses a transceiver module, for example, but not limited to, a network interface card or a transceiver, to implement communication between the computing device 300 and another device or a communication network.

Embodiments of this application further provide a computing device cluster. The computing device cluster is configured to implement functions of the first cloud management platform (or another cloud management platform 100) or the intermediate cloud management platform 200 in the foregoing method embodiments. The computing device cluster includes at least one computing device. The computing device may be a server, for example, a central server, an edge server, or a local server in a local data center.

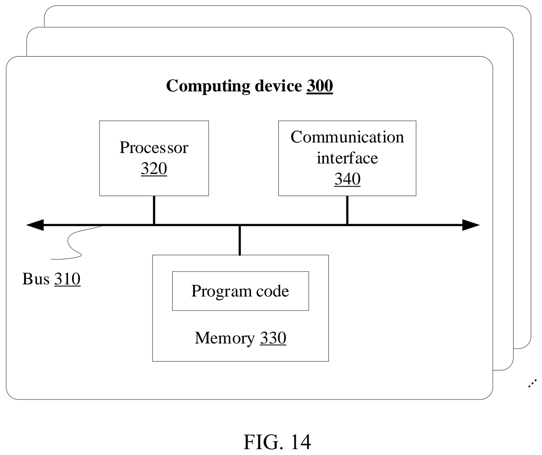

FIG. 14 is an example of a diagram of a structure of the computing device cluster. As shown in FIG. 14, the computing device cluster includes a plurality of computing devices 300, and the plurality of computing devices 300 may be connected through a network (for example, a wide area network or a local area network).

When the computing device cluster is configured to implement the functions of the first cloud management platform, a memory 330 in one or more computing devices 300 in the computing device cluster may store same instructions for performing the functions performed by the first cloud management platform. Alternatively, a memory 330 in one or more computing devices 300 in the computing device cluster may store instructions for performing some functions performed by the first cloud management platform. In other words, a combination of the one or more computing devices 300 may jointly execute instructions for performing the functions performed by the first cloud management platform.

It should be noted that memories 330 in different computing devices 300 in the computing device cluster may store different instructions, and the instructions are separately used to perform some functions of the first cloud management platform. In other words, instructions stored in memories 330 in different computing devices 300 may implement a function of one or more of the following modules: a negotiation module 110, a determining module 120, a registration module 130, and a second agent module 140.

When the computing device cluster is configured to implement the functions of the intermediate cloud management platform, a memory 330 in one or more computing devices 300 in the computing device cluster may store same instructions for performing the functions performed by the intermediate cloud management platform. Alternatively, a memory 330 in one or more computing devices 300 in the computing device cluster may store instructions for performing some functions performed by the intermediate cloud management platform. In other words, a combination of the one or more computing devices 300 may jointly execute instructions for performing the functions performed by the intermediate cloud management platform.

It should be noted that memories 330 in different computing devices 300 in the computing device cluster may store different instructions, and the instructions are separately used to perform some functions of the intermediate cloud management platform 200. In other words, instructions stored in memories 330 in different computing devices 300 may implement a function of one or more of the following modules: a receiving module 210, a control module 220, a cloud service providing module 230, a first agent module 240, and a second agent module 250.

Embodiments of this application further provide a computer program product including instructions. The computer program product may be software or a program product that includes instructions and that can be run on a computing device or can be stored in any usable medium. When the computer program product is run on at least one computing device, the at least one computing device is enabled to perform the steps performed by the first cloud management platform or the steps performed by the intermediate cloud management platform in the inter-cloud capability negotiation method described above.

Embodiments of this application further provide a computer-readable storage medium. The computer-readable storage medium may be any usable medium that can be stored by a computing device, or a data storage device, for example, a data center that includes one or more usable media. The usable medium may be a magnetic medium (for example, a floppy disk, a hard disk, or a magnetic tape), an optical medium (for example, a DVD), a semiconductor medium (for example, a solid-state disk), or the like. The computer-readable storage medium includes instructions. The instructions instruct the computing device to perform the steps performed by the first cloud management platform or the steps performed by the intermediate cloud management platform in the inter-cloud capability negotiation method described above.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. An inter-cloud capability negotiation method, comprising:
when a tenant inputs or selects configuration information of a required cloud service via an intermediate cloud management platform, and both a first cloud service and a second cloud service meet the configuration information, negotiating, by a first cloud management platform, with a second cloud management platform via the intermediate cloud management platform, and determining, based on a result of the negotiation, whether to provide the first cloud service for the tenant, wherein
the first cloud management platform is configured to provide the first cloud service, the second cloud management platform is configured to provide the second cloud service, and the intermediate cloud management platform connects the first cloud management platform and the second cloud management platform.

2. The method according to claim 1, wherein the first cloud management platform and the second cloud management platform are deployed in data centers provided by different cloud service providers.

3. The method according to claim 2, wherein before negotiating, by the first cloud management platform, with the second cloud management platform via the intermediate cloud management platform, the method further comprises:
registering, by the first cloud management platform, a feature of the first cloud service with the intermediate cloud management platform, wherein the intermediate cloud management platform further stores a feature that is of the second cloud service and that is registered by the second cloud management platform; and
negotiating, by the first cloud management platform, with the second cloud management platform via the intermediate cloud management platform comprises:
negotiating, by the first cloud management platform, with the second cloud management platform based on a comparison result between the first cloud service and the second cloud service, wherein the comparison result is obtained after the intermediate cloud management platform compares the feature of the first cloud service with the feature of the second cloud service based on a strategy template.

4. The method according to claim 3, wherein the strategy template comprises one or any combination of the following:
a template set by the tenant;
a template set by the intermediate cloud management platform; and
a template set by the first cloud management platform or the second cloud management platform.

5. The method according to claim 2, wherein the intermediate cloud management platform comprises a first agent module and a second agent module, the first agent module is connected to the first cloud management platform, the second agent module is connected to the second cloud management platform, and before negotiating, by the first cloud management platform, with the second cloud management platform via the intermediate cloud management platform, the method further comprises:
registering, by the first cloud management platform, a feature of the first cloud service with the intermediate cloud management platform, wherein the intermediate cloud management platform further stores a feature that is of the second cloud service and that is registered by the second cloud management platform; and
negotiating, by the first cloud management platform, with the second cloud management platform via the intermediate cloud management platform comprises:
negotiating, by the first cloud management platform, with the second cloud management platform by using the first agent module and the second agent module based on the feature of the first cloud service and the feature of the second cloud service.

6. The method according to claim 5, wherein the method further comprises:
sending, by the first cloud management platform, configuration information of the first agent module to the intermediate cloud management platform, so that the intermediate cloud management platform creates the first agent module based on the configuration information of the first agent module.

7. The method according to claim 2, wherein the first cloud management platform comprises a second agent module, the second agent module is connected to the second cloud management platform, and before negotiating, by the first cloud management platform, with the second cloud management platform via the intermediate cloud management platform, the method further comprises:
receiving, by the first cloud management platform, a feature that is of the second cloud service and that is registered by the second cloud management platform; and
negotiating, by the first cloud management platform, with the second cloud management platform via the intermediate cloud management platform comprises:
in response to a notification message sent by the intermediate cloud management platform, negotiating, by the first cloud management platform, with the second cloud management platform by using the second agent module based on a feature of the first cloud service and the feature of the second cloud service.

8. The method according to claim 7, wherein the method further comprises:
receiving, by the first cloud management platform, configuration information of the second agent module sent by the second cloud management platform; and
creating, by the first cloud management platform, the second agent module based on the configuration information of the second agent module.

9. The method according to claim 2, wherein the second cloud management platform comprises a first agent module, the first agent module is connected to the first cloud management platform, and before negotiating, by the first cloud management platform, with the second cloud management platform via the intermediate cloud management platform, the method further comprises:
registering, by the first cloud management platform, a feature of the first cloud service with the second cloud management platform; and
negotiating, by the first cloud management platform, with the second cloud management platform via the intermediate cloud management platform comprises:
negotiating, by the first cloud management platform, with the second cloud management platform by using the first agent module based on the feature of the first cloud service and a feature of the second cloud service.

10. The method according to claim 9, wherein the method further comprises:
sending, by the first cloud management platform, configuration information of the first agent module to the second cloud management platform, so that the second cloud management platform creates the first agent module based on the configuration information of the first agent module.

11. An inter-cloud capability negotiation method, comprising:
receiving, by an intermediate cloud management platform, configuration information that is of a required cloud service and that is input or selected by a tenant;
when both a first cloud service and a second cloud service meet the configuration information, indicating, by the intermediate cloud management platform, a first cloud management platform to negotiate with a second cloud management platform, wherein the first cloud service is provided by the first cloud management platform, the second cloud service is provided by the second cloud management platform, and the intermediate cloud management platform connects the first cloud management platform and the second cloud management platform; and
providing, by the intermediate cloud management platform, a cloud service for the tenant based on a result of the negotiation.

12. The method according to claim 11, wherein the first cloud management platform and the second cloud management platform are deployed in cloud environments provided by different cloud service providers.

13. The method according to claim 12, wherein the intermediate cloud management platform stores a strategy template, and indicating, by the intermediate cloud management platform, the first cloud management platform to negotiate with the second cloud management platform comprises:
comparing, by the intermediate cloud management platform, a feature of the first cloud service with a feature of the second cloud service based on the strategy template, wherein the feature of the first cloud service is registered by the first cloud management platform with the intermediate cloud management platform, and the feature of the second cloud service is registered by the second cloud management platform with the intermediate cloud management platform.

14. The method according to claim 13, wherein the strategy template comprises one or any combination of the following:
a template set by the tenant;
a template set by the intermediate cloud management platform; and
a template set by the first cloud management platform or the second cloud management platform.

15. The method according to claim 12, wherein the intermediate cloud management platform comprises a first agent module and a second agent module, the first agent module is connected to the first cloud management platform, the second agent module is connected to the second cloud management platform, and indicating, by the intermediate cloud management platform, the first cloud management platform to negotiate with the second cloud management platform comprises:
indicating, by the intermediate cloud management platform, the first agent module to negotiate with the second agent module based on a feature of the first cloud service and a feature of the second cloud service, wherein the feature of the first cloud service is registered by the first cloud management platform with the intermediate cloud management platform, and the feature of the second cloud service is registered by the second cloud management platform with the intermediate cloud management platform.

16. The method according to claim 15, wherein the method further comprises:
receiving, by the intermediate cloud management platform, configuration information of the first agent module sent by the first cloud management platform, and creating the first agent module based on the configuration information of the first agent module; and
receiving, by the intermediate cloud management platform, configuration information of the second agent module sent by the second cloud management platform, and creating the second agent module based on the configuration information of the second agent module.

17. The method according to claim 12, wherein the first cloud management platform comprises a second agent module, the second agent module is connected to the second cloud management platform, and indicating, by the intermediate cloud management platform, the first cloud management platform to negotiate with the second cloud management platform comprises:
sending, by the intermediate cloud management platform, a notification message to the first cloud management platform, wherein the notification message indicates the first cloud management platform to negotiate with the second cloud management platform by using the second agent module based on a feature of the first cloud service and a feature of the second cloud service, and the feature of the second cloud service is registered by the second cloud management platform with the first cloud management platform.

18. The method according to claim 12, wherein the second cloud management platform comprises a first agent module, the first agent module is connected to the first cloud management platform, and indicating, by the intermediate cloud management platform, the first cloud management platform to negotiate with the second cloud management platform comprises:
sending, by the intermediate cloud management platform, a notification message to the second cloud management platform, wherein the notification message indicates the second cloud management platform to negotiate with the first cloud management platform by using the first agent module based on a feature of the first cloud service and a feature of the second cloud service, and the feature of the first cloud service is registered by the first cloud management platform with the second cloud management platform.

19. A first cloud management platform, comprising:
a negotiation module, configured to: when a tenant inputs or selects configuration information of a required cloud service via an intermediate cloud management platform, and both a first cloud service and a second cloud service meet the configuration information, negotiate with a second cloud management platform via the intermediate cloud management platform, wherein the first cloud management platform is configured to provide the first cloud service, the second cloud management platform is configured to provide the second cloud service, and the intermediate cloud management platform connects the first cloud management platform and the second cloud management platform; and
a determining module, configured to determine, based on a result of the negotiation, whether to provide the first cloud service for the tenant.

20. The first cloud management platform according to claim 19, wherein the first cloud management platform and the second cloud management platform are deployed in data centers provided by different cloud service providers.

21. The first cloud management platform according to claim 20, wherein the first cloud management platform further comprises:
a registration module, configured to register a feature of the first cloud service with the intermediate cloud management platform, wherein the intermediate cloud management platform further stores a feature that is of the second cloud service and that is registered by the second cloud management platform; and
the negotiation module is configured to negotiate with the second cloud management platform based on a comparison result between the first cloud service and the second cloud service, wherein the comparison result is obtained after the intermediate cloud management platform compares the feature of the first cloud service with the feature of the second cloud service based on a strategy template.

22. The first cloud management platform according to claim 21, wherein the strategy template comprises one or any combination of the following:
a template set by the tenant;
a template set by the intermediate cloud management platform; and
a template set by the first cloud management platform or the second cloud management platform.

23. The first cloud management platform according to claim 20, wherein the intermediate cloud management platform comprises a first agent module and a second agent module, the first agent module is connected to the first cloud management platform, the second agent module is connected to the second cloud management platform, and the first cloud management platform further comprises:
a registration module, configured to register a feature of the first cloud service with the intermediate cloud management platform, wherein the intermediate cloud management platform further stores a feature that is of the second cloud service and that is registered by the second cloud management platform; and
the negotiation module is configured to negotiate with the second cloud management platform by using the first agent module and the second agent module based on the feature of the first cloud service and the feature of the second cloud service.

24. The first cloud management platform according to claim 23, wherein
the negotiation module is further configured to send configuration information of the first agent module to the intermediate cloud management platform, so that the intermediate cloud management platform creates the first agent module based on the configuration information of the first agent module.

25. The first cloud management platform according to claim 20, wherein the first cloud management platform further comprises:
a second agent module, configured to connect to the second cloud management platform; and
the negotiation module is further configured to: receive a feature that is of the second cloud service and that is registered by the second cloud management platform; and in response to a notification message sent by the intermediate cloud management platform, negotiate with the second cloud management platform by using the second agent module based on a feature of the first cloud service and the feature of the second cloud service.

26. The first cloud management platform according to claim 25, wherein
the negotiation module is further configured to: receive configuration information of the second agent module sent by the second cloud management platform, and create the second agent module based on the configuration information of the second agent module.

27. The first cloud management platform according to claim 20, wherein the second cloud management platform comprises a first agent module, the first agent module is connected to the first cloud management platform, and the first cloud management platform further comprises:
a registration module, configured to register a feature of the first cloud service with the second cloud management platform; and
the negotiation module is configured to: in response to a notification message sent by the intermediate cloud management platform, negotiate with the second cloud management platform by using the first agent module based on the feature of the first cloud service and a feature of the second cloud service.

28. The first cloud management platform according to claim 27, wherein
the negotiation module is further configured to send configuration information of the first agent module to the second cloud management platform, so that the second cloud management platform creates the first agent module based on the configuration information of the first agent module.

29. An intermediate cloud management platform, comprising:
a receiving module, configured to receive configuration information that is of a required cloud service and that is input or selected by a tenant;
a control module, configured to: when both a first cloud service and a second cloud service meet the configuration information, indicate a first cloud management platform to negotiate with a second cloud management platform, wherein the first cloud service is provided by the first cloud management platform, the second cloud service is provided by the second cloud management platform, and the intermediate cloud management platform connects the first cloud management platform and the second cloud management platform; and
a cloud service providing module, configured to provide a cloud service for the tenant based on a result of the negotiation.

30. The intermediate cloud management platform according to claim 29, wherein the first cloud management platform and the second cloud management platform are deployed in cloud environments provided by different cloud service providers.

31. The intermediate cloud management platform according to claim 30, wherein the intermediate cloud management platform stores a strategy template; and
the control module is configured to compare a feature of the first cloud service with a feature of the second cloud service based on the strategy template, wherein the feature of the first cloud service is registered by the first cloud management platform with the intermediate cloud management platform, and the feature of the second cloud service is registered by the second cloud management platform with the intermediate cloud management platform.

32. The intermediate cloud management platform according to claim 31, wherein the strategy template comprises one or any combination of the following:
a template set by the tenant;
a template set by the intermediate cloud management platform; and
a template set by the first cloud management platform or the second cloud management platform.

33. The intermediate cloud management platform according to claim 30, wherein the intermediate cloud management platform further comprises:
a first agent module, configured to connect to the first cloud management platform; and
a second agent module, configured to connect to the second cloud management platform; and
the control module is configured to indicate the first agent module to negotiate with the second agent module based on a feature of the first cloud service and a feature of the second cloud service, wherein the feature of the first cloud service is registered by the first cloud management platform with the intermediate cloud management platform, and the feature of the second cloud service is registered by the second cloud management platform with the intermediate cloud management platform.

34. The intermediate cloud management platform according to claim 33, wherein
the receiving module is further configured to: receive configuration information of the first agent module sent by the first cloud management platform, and receive configuration information of the second agent module sent by the second cloud management platform; and
the control module is further configured to: create the first agent module based on the configuration information of the first agent module, and create the second agent module based on the configuration information of the second agent module.

35. The intermediate cloud management platform according to claim 30, wherein the first cloud management platform comprises a second agent module, and the second agent module is connected to the second cloud management platform; and
the control module is configured to send a notification message to the first cloud management platform, wherein the notification message indicates the first cloud management platform to negotiate with the second cloud management platform by using the second agent module based on a feature of the first cloud service and a feature of the second cloud service, and the feature of the second cloud service is registered by the second cloud management platform with the first cloud management platform.

36. The intermediate cloud management platform according to claim 30, wherein the second cloud management platform comprises a first agent module, and the first agent module is connected to the first cloud management platform; and
the control module is configured to send a notification message to the second cloud management platform, wherein the notification message indicates the second cloud management platform to negotiate with the first cloud management platform by using the first agent module based on a feature of the first cloud service and a feature of the second cloud service, and the feature of the first cloud service is registered by the first cloud management platform with the second cloud management platform.

37. A computing device, comprising a processor and a memory, wherein the processor executes computer program code in the memory, to implement the method according to any one of claims 1 to 10 or the method according to any one of claims 11 to 18.

38. A computer-readable storage medium, wherein the computer-readable storage medium stores computer program code, and when the computer program code is executed by a computing device, the computing device performs the method according to any one of claims 1 to 10 or the method according to any one of claims 11 to 18.
